# EUROPÄISCHE PATENTSCHRIFT

(11) **EP 2 806 200 B1**
(45) Veröffentlichungstag und Bekanntmachung des Hinweises auf die Patenterteilung: **23.03.2016**
(21) Anmeldenummer: 14162577.2
(22) Anmeldetag: 31.03.2014
(51) Int. Cl.: F16L 37/088

(54) **STECKVERBINDUNG FÜR ROHRLEITUNGEN MIT INDIKATORRING**
PIPE CONNECTION WITH INDICATOR RING
RACCORD ENFICHABLE POUR CONDUITES AVEC BAGUE INDICATRICE

(30) Priorität: 23.05.2013 DE 102013105253
(43) Veröffentlichungstag der Anmeldung: 26.11.2014
(73) Patentinhaber: Johannes Schäfer vormals Stettiner Schraubenwerke GmbH & Co. KG, 35410 Hungen (DE)
(72) Erfinder: Funk, Hans Georg, 35410 Hungen (DE)
(74) Vertreter: Haar, Lucas Heinz Jörn

(56) Entgegenhaltungen:
- EP-A1- 0 740 100
- EP-A1- 2 431 645
- DE-A1- 19 819 758
- DE-A1-102007 059 329
- DE-C1- 10 022 085
- US-A1- 2004 070 197

## Beschreibung

Die Erfindung betrifft eine Steckverbindung für Rohrleitungen mit einem rohrförmigen Innenteil und einem eine Öffnung aufweisenden Außenteil, die miteinander verbunden werden können, wobei das Innenteil mit einem Einsteckende voran in die Öffnung des Außenteils einsteckbar und in einer Verbindungsstellung in der Öffnung des Außenteils mittels eines in radialer Richtung verformbaren Halteelements mit dem Außenteil verbindbar ist, wobei ein elastisch aufweitbarer Indikatorring vor dem Verbinden des Innenteils mit dem Außenteil in einer Bereitschaftsposition auf dem Innenteil angeordnet ist und beim Verbinden des Innenteils mit dem Außenteil durch das Außenteil aus der Bereitschaftsposition in eine Anzeigeposition verlagert werden kann.

Bei einer aus DE 198 12 544 A1 bekannten Steckverbindung der angegebenen Art ist der Indikatorring zur Anzeige, ob die Elemente der Steckverbindung korrekt gekuppelt sind, in einer Nut in der Mantelfläche des Innenteils angeordnet. Der Indikatorring ist bezüglich seines Durchmessers aufweitbar ausgebildet und sein Innendurchmesser entspricht in etwa dem Außendurchmesser der Nut. Der Indikatorring ist einer im Außenteil angeordneten Löseeinrichtung mit einem ringförmigen Lösegriff zugeordnet, der mit einer Dichtungslippe an einer Stirnfläche des Außenteils anliegt. Beim Einstecken des Innenteils in das Außenteil gleitet der Lösegriff mit seinem radial inneren Rand über die äußere Mantelfläche des Innenteils und drückt den Indikatorring aus der Nut des Innenteils heraus, bevor er in die Nut einrastet. Der dadurch aus der Nut entfernte und auf dem Innenteil verlagerte Indikatorring soll anzeigen, dass die Verbindung von Innenteil und Außenteil hergestellt ist. Bei der bekannten Einrichtung erfolgt das Herausdrücken des Indikatorrings aus der Nut bevor der Sicherungsring in die Sperrstellung zwischen den konischen Sperrflächen von Innenteil und Außenteil einrastet. Es besteht daher die Gefahr, dass der Indikatorring in die Anzeigeposition gebracht wird, obwohl eine einwandfreie Verbindung der Kupplungsteile nicht hergestellt worden ist.

Bei einer aus DE 10 2007 059 329 A1 bekannten Steckverbindung für Rohrleitungen mit einem Innenteil und einem Außenteil, die miteinander verbunden und voneinander getrennt werden können, ist das Innenteil mit einem Steckzapfen in eine Öffnung des Außenteils einsteckbar und dort über ein in radialer Richtung verformbares Halteelement verriegelbar. Auf dem Steckzapfen ist axial verschiebbar eine Entriegelungshülse angeordnet, die gegen die Kraft eines Federelements in eine Entriegelungsstellung bewegbar ist, in der das Halteelement aus der Verriegelungsstellung herausdrängbar und der Steckzapfen von dem Außenteil lösbar ist. Die Entriegelungshülse hat eine Schulter mit einem konischen, sich entgegen der Steckrichtung nach außen erweiternden Abschnitt, an dem das Federelement mit radialer Vorspannung anliegt. Hierdurch kann mit niedriger Axialkraft eine Entriegelung bewirkt werden. Eine Anzeigeeinrichtung weist die bekannte Steckverbindung nicht auf.

Eine Steckverbindung gemäß des Gattungsbegriffs ist aus DE 100 22 085 C1 bekannt. Ein Innenteil kann in eine Öffnung eines Außenteils eingesteckt werden, wobei das Innenteil in der Öffnung des Außenteils in eine Verriegelungsstellung bewegbar und durch ein Halteelement im Außenteil festhaltbar ist.

Der Erfindung liegt die Aufgabe zugrunde, eine Steckverbindung der eingangs genannten Art zu schaffen, bei der das Verbinden des Innenteils mit dem Außenteil durch das radial verformbare Halteelement zuverlässig und deutlich sichtbar angezeigt wird. Die Steckverbindung soll weiterhin in der Verbindungsstellung nur wenig axiales Spiel haben und kostengünstig herstellbar sein. Die Anzeige der Verbindungsstellung soll deutlich sichtbar sein und ertastet werden können.

Die Aufgabe wird nach der Erfindung durch eine Steckverbindung mit den in Anspruch 1 angegebenen Merkmalen gelöst. Vorteilhafte Weiterbildungen der Erfindung sind in den Unteransprüchen angegeben.

Die Steckverbindung nach der Erfindung umfasst ein rohrförmiges Innenteil und ein eine Öffnung aufweisendes Außenteil, die miteinander verbunden werden können, wobei das Innenteil in die Öffnung des Außenteils einsteckbar und in einer Verbindungsstellung in der Öffnung des Außenteils mittels eines in radialer Richtung verformbaren Halteelements mit dem Außenteil verbindbar ist, wobei das Innenteil über die Verbindungsstellung hinaus etwas tiefer in die Öffnung des Außenteils hinein bewegbar ist und wobei ein elastisch aufweitbarer Indikatorring vor dem Verbinden des Innenteils mit dem Außenteil in einer Bereitschaftsposition auf dem Innenteil angeordnet ist und beim Verbinden des Innenteils mit dem Außenteil durch das Außenteil aus der Bereitschaftsposition in eine Anzeigeposition verlagert werden kann, wobei das Innenteil eine zwischen der Bereitschaftsposition und der Anzeigeposition angeordnete Ringschulter aufweist, die einen Scheitelabschnitt, auf der dem Einsteckende zugekehrten Seite eine sich in Richtung des Einsteckendes verjüngende erste Rampenfläche und auf der dem Einsteckende abgekehrten Seite eine sich in der vom Einsteckende entfernenden Richtung verjüngende zweite Rampenfläche aufweist und wobei der Indikatorring im nicht aufgeweiteten Zustand einen Innendurchmesser hat, der kleiner ist als der Außendurchmesser des Scheitelabschnitts der Ringschulter und wobei auf dem Innenteil ein Löseelement axial verschiebbar angeordnet ist, durch welches das Halteelement aus der Verbindungsstellung in eine Lösestellung bewegbar ist, wobei das Löseelement eine radiale Schulter aufweist, an der der Indikatorring anliegt, wenn er in der Bereitschaftsposition angeordnet ist und dass zwischen der Schulter und dem Außenteil ein Federelement angeordnet ist, welches das Löseelement ringförmig umgreift und einem Eindringen des Löseelements in das Außenteil entgegenwirkt, wobei das Löseelement gegen die Kraft des Federelements in eine das Lösen des Halteelements bewirkende Lösestellung bewegbar ist, in der das Innenteil von dem Außenteil lösbar ist.

Bei der Steckverbindung nach der Erfindung wird der Indikatorring durch eine beim Stecken zwangsläufig eintretende, ruckartige Relativbewegung zwischen dem Innenteil und dem Außenteil in die Anzeigeposition gebracht, wobei das Innenteil bei dieser Relativbewegung etwas über die Verbindungsstellung hinausgehend tiefer in das Außenteil eindringt. Hierdurch wird gewährleistet, dass der Indikatorring nur dann in die Anzeigeposition gelangt, wenn das Halteelement die Verriegelungsstellung, in der Innenteil und Außenteil miteinander verbunden sind, eingenommen hat. Die erfindungsgemäße Steckverbindung hat weiterhin den Vorteil, dass der Indikatorring aus der Bereitschaftsposition in eine deutlich von dieser entfernten Anzeigeposition verlagert wird, so das klar erkennbar und fühlbar ist, ob die Verbindung hergestellt ist oder nicht.

Der Indikatorring kann nach der Erfindung ein O-Ring aus Elastomer sein. Hierbei ist es vorteilhaft, wenn der Innendurchmesser des O-Rings im entspannten Zustand 10 bis 30 % kleiner ist als der Außendurchmesser des Scheitelabschnitts der Ringschulter. Die Verwendung eines O-Rings als Indikatorring ist kostengünstig. Die Funktion des Indikatorrings kann aber auch durch einen geschlitzten Ring aus Metall oder Kunststoff oder einen Wurmfederring erfüllt werden.

Nach der Erfindung kann die erste Rampenfläche der Ringschulter die Form eines Kegels haben, wobei der Kegelwinkel in einen Bereich von 50° bis 70° liegt und insbesondere 60° beträgt. Durch einen Kegelwinkel in diesem Bereich kann die Axialkraft zur Aufweitung und Verlagerung des Indikatorrings eine vorteilhafte kleine Größe erhalten, insbesondere wenn es sich um einen O-Ring handelt.

Auf dem Innenteil der Steckverbindung ist ein Löseelement axial verschiebbar angeordnet, durch welches das Halteelement aus der Verbindungsstellung in eine Lösestellung bewegbar ist, wobei das Löseelement eine radiale Schulter aufweist, an der der Indikatorring anliegt, wenn er in der Bereitschaftsposition angeordnet ist. Das Löseelement kann in axialer Richtung fest oder nachgiebig an dem Außenteil abgestützt sein. Das Löseelement ist an einem zwischen der Schulter und dem Außenteil angeordneten Federelement abgestützt, welches das Löseelement ringförmig umgreift und dem Eindringen des Löseelements in das Außenteil entgegenwirkt. Das Löseelement ist gegen die Kraft des Federelements in eine das Lösen des Halteelements bewirkende Lösestellung bewegbar, in der das Innenteil von dem Außenteil lösbar ist. Die axiale Kraft des Federelements und der seiner Verlagerung entgegenwirkende Verlagerungswiderstand des Indikatorrings sind nach der Erfindung so aufeinander abgestimmt, dass das an dem Federelement abgestützte Löseelement den Indikatorring nicht über den Scheitelabschnitt der Ringschulter drücken kann, bevor das Innenteil eine die Verbindungsstellung zwangsläufig hervorrufende Stellung im Außenteil erreicht hat. Die axiale Kraft des Federelements kann nach der Erfindung dadurch beeinflusst werden, dass die Schulter des Löseelements einen konischen, sich in Richtung des Einsteckendes des Innenteils verjüngenden konischen Abschnitt hat, an dem das Federelement mit radialer Vorspannung anliegt. An den großen Durchmesser des konischen Abschnitts kann sich ein Flansch anschließen, der sich radial nach außen erstreckt und eine Anlagefläche für den Indikatorring bildet.

Die Erfindung wird nachfolgend anhand Ausführungsbeispiels näher erläutert, in der Zeichnung dargestellt ist. Es zeigen
- Figur 1: eine Ansicht des Innenteils und des Außenteils einer Steckverbindung nach der Erfindung voneinander getrennt und halbseitig geschnitten,
- Figur 2: einen Halbschnitt einer ersten Stellung der ineinander gesteckten Teile der Steckverbindung gemäß Figur 1,
- Figur 3: einen Halbschnitt einer zweiten Stellung der ineinander gesteckten Teile der Steckverbindung gemäß Figur 1,
- Figur 4: einen Halbschnitt einer dritten Stellung der ineinander gesteckten Teile der Steckverbindung gemäß Figur 1 und,
- Figur 5: einen Halbschnitt der Verbindungsstellung der ineinander gesteckten Teile der Steckverbindung gemäß Figur 1.

Die in der Zeichnung dargestellte Steckverbindung besteht aus einem Innenteil 1 und einem Außenteil 2, die durch ein Halteelement 3 miteinander verbindbar sind. Das Innenteil 1 hat die Form eines Rohrstücks und kann an dem in der Zeichnung oberen Ende 4 mit einer Druckleitung verbunden werden. Das andere Ende des Innenteils 1 ist als Einsteckende 5 ausgebildet, das in einer Ringnut 6 einen Dichtring 7 trägt. Die Ringnut 6 befindet sich in einem zylindrischen Endabschnitt 8 der Außenfläche des Einsteckendes 5. An den Endabschnitt 8 schließt sich eine Kegelfläche 9 an, deren Durchmesser in Richtung des Endes 4 zunimmt und die in eine Zylinderfläche 10 größeren Durchmessers übergeht. In der Zylinderfläche 10 ist eine sich radial nach innen erstreckende Nut 11 ausgebildet, in der sich ein Abstützelement 12 befindet. Das Abstützelement 12 ist ein geschlitzter, elastisch verformbarer Runddraht-Sprengring, z.B aus rostfreiem Federstahl, Federbronze, oder Kunststoff und greift mit der radial inneren Hälfte seines Querschnitts in die an die Querschnittsform des Runddraht-Sprengrings angepasste Nut 11 ein.

Auf der anderen Seite der Nut 11 wird die Zylinderfläche 10 zum Ende 4 hin durch eine Nut 13 mit einem darin angeordneten Dichtring begrenzt. Auf die Nut 13 folgt eine konische Schulter 14 und danach ein zylindrischer Aufnahmeabschnitt 15 an, der einen größeren Durchmessers als die Zylinderfläche 10 hat. Zum Ende 4 hin wird der Aufnahmeabschnitt 15 von einer Ringschulter 16 begrenzt wird. Die Ringschulter 16 hat einen Scheitelabschnitt 17, der einen größeren Durchmesser hat als der Aufnahmeabschnitt 15. Der Scheitelabschnitt 17 ist mit dem Aufnahmeabschnitt 15 durch eine kegelförmige erste Rampenfläche 18 verbunden. Auf der entgegengesetzten Seite hat die Ringschulter 16 eine kegelförmige zweite Rampenfläche 19, deren Durchmesser zum Ende 4 hin abnimmt. An die zweite Rampenfläche 19 grenzt der Nutgrund einer Ringnut 20 an. Alternativ kann auch eine im wesentlichen zylindrische Fläche an die Rampenfläche 19 angrenzen.

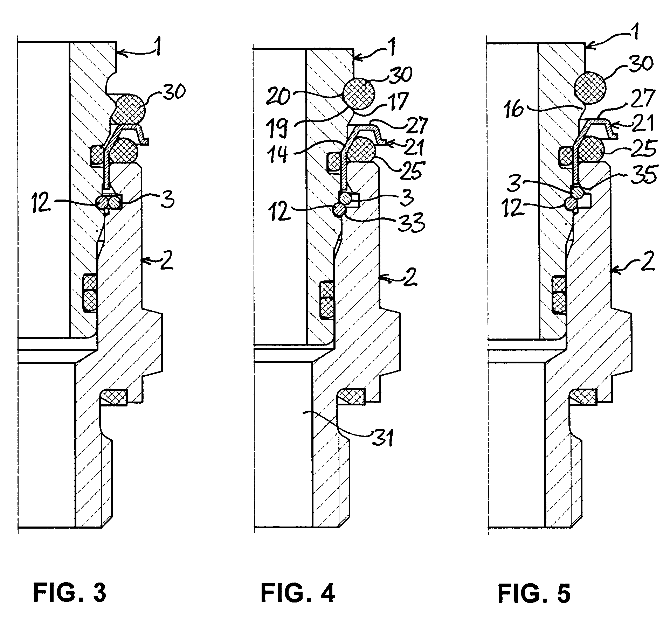

Auf der Zylinderfläche 10 ist axial verschiebbar ein hülsenförmiges Löseelement 21 mit einer Schulter 22 angeordnet. Das Löseelement 21 hat eine zylindrische Mantelfläche 23 und weist auf seiner dem Abstützelement 12 zugekehrten Seite eine Stirnfläche 24 und auf der entgegengesetzten Seite die Schulter 22 auf. Auf dem Löseelement 21 ist ein ringförmiges Federelement 25 aus einem elastomeren Material angeordnet, das sich an der Schulter 22 abstützen kann. Das Federelement 25 ist als O-Ring ausgebildet. Es umspannt das Löseelement 21 mit radialer Vorspannung, die durch einen im entspannten Zustand gegenüber dem Außendurchmesser des Löseelements 21 kleineren Innendurchmesser des Federelements 25 erreicht wird. Die Schulter 22 hat einen konischen Abschnitt 26, dessen Durchmesser entgegen der Steckrichtung, d.h. in Richtung des Endes 4 zunimmt. An das Ende größeren Durchmessers des Abschnitts 26 schließt sich ein Flansch 27 an, der sich radial nach außen erstreckt und dessen äußerer Randbereich 28 in Richtung des konischen Abschnitts 26 etwa in einem Winkel von 45° zurückgebogen ist. Der konische Abschnitt 26 hat vorzugsweise einen Kegelwinkel von 60°. Je nach Elastizität des Federelements 25 kann der Kegelwinkel aber größer oder kleiner bemessen sein. Die axiale Länge des konischen Abschnitts 26 ist im Wesentlichen gleich der axialen Dicke des Federelements 25, wobei das Federelement 25 in der in Figur 5 dargestellten Verbindungsstellung der Steckverbindung nur etwa mit der Hälfte seiner axialen Dicke mit dem Abschnitt 26 in Eingriff ist.

Auf dem Aufnahmeabschnitt 15 befindet sich ein Indikatorring 30, der sich in axialer Richtung einerseits an dem Flansch 27 und andererseits an der ersten Rampenfläche 18 der Ringschulter 16 abstützt. Der Indikatorring 30 kann als O-Ring ausgebildet sein und in entspanntem Zustand einen Innendurchmesser haben, der 10 bis 30 % kleiner ist als der Außendurchmesser des Scheitelabschnitts 17 der Ringschulter 16. Der Indikatorring kann aber auch als geschlitzter Kunststoffring oder metallischer Federring, z.B. Wurmfederring, ausgeführt sein.

Zur Aufnahme des Innenteils 1 weist das Außenteil 2 eine durchgehende Aufnahmebohrung 31 mit mehreren Abschnitten auf, deren Innendurchmesser an die Außendurchmesser der Abschnitte des Einsteckendes 5 angepasst sind. In der Aufnahmebohrung 31 befindet sich eine ringförmige Ausnehmung 32, in der das Halteelement 3 angeordnet ist. Die radiale Tiefe der Ausnehmung 32 ist so bemessen, dass das Halteelement 3 vollständig in die Ausnehmung 32 verdrängt werden kann. Die in Einsteckrichtung hintere Seitenwand 33 der Ausnehmung 32 erstreckt sich senkrecht zur Längsachse der Aufnahmebohrung 31. Die in Steckrichtung vordere Seitenwand 34 der Ausnehmung 32 weist eine als 30°-Fase ausgebildete Anlagefläche 35 für das Halteelement 3 in der Verriegelungsstellung auf. Das Halteelement 3 ist wie das Abstützelement 12 als geschlitzter Runddraht-Sprengring ausgebildet. Im entspannten Zustand hat das Halteelement 3 einen Innendurchmesser, der mit dem Durchmesser der Zylinderfläche 10 des Einsteckendes 5 im wesentlichen übereinstimmt.

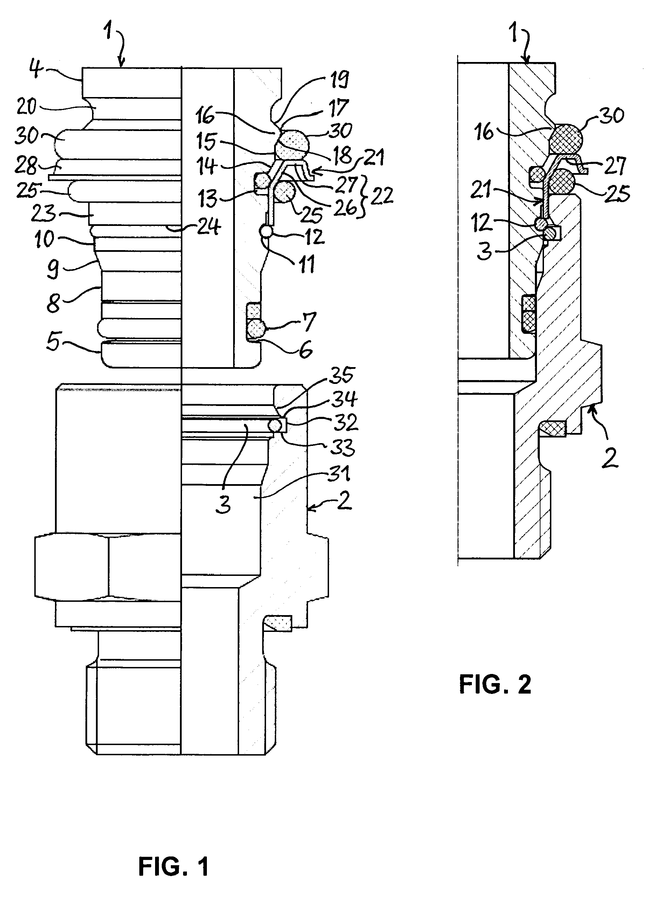

Zum Verbinden von Innenteil 1 und Außenteil 2 wird das Einsteckende 5 in die Aufnahmebohrung 31 gesteckt, wobei das Abstützelement 12 an das Halteelement 3 anstößt und dieses gegen die Seitenwand 33 drückt, vergleiche Figur 2. Durch Erhöhung der in Steckrichtung auf das Innenteil 1 einwirkenden Steckkraft und Abstützen des Außenteils 2 in der Gegenrichtung wird in der nächsten Phase des Steckvorgangs das Abstützelement 12 in das Haltelement 3 hinein gedrückt, welches dabei aufgeweitet wird. Das Löseelement 21 wird durch die Kraft des an dem Außenteil 2 anliegenden Federelements 25 daran gehindert tiefer in die Aufnahmebohrung 31 einzudringen, so dass sich der Abstand zwischen dem Flansch 27 und der Ringschulter 16 verringert und der Indikatorring 30 radial und axial verformt und etwas in Richtung des Scheitelabschnitts 17 auf dem Innenteil 1 verschoben wird, wobei die Kraft des Federelements 25 und der Widerstand gegen Verschieben des Indikatorrings 30 im Gleichgewicht sind.

Wenn die in Figur 3 gezeigte Stellung des Innenteils 1 in Bezug auf das Außenteil 2 erreicht wird, nimmt der der Steckkraft entgegen gerichtete Widerstand des Halteelements 3 erheblich ab, so dass unter der Wirkung des Kraftüberschusses in Steckrichtung das Innenteil 1 sprungartig bis in die in Figur 4 gezeigte Stellung im Außenteil 2 getrieben wird, in der sich das Innenteil 1 mit dem Abstützelement 12 an der Stirnwand 33 des Außenteils 2 abstützt. Ein tieferes Eindringen des Innenteils in die Aufnahmebohrung 31 ist nicht mehr möglich und der aktive Steckvorgang ist beendet. Das Innenteil 1 wird bei der Bewegung in die Stellung gemäß Figur 4 so weit gegenüber dem Löseelement 21 verschoben, dass der Indikatorring 30 durch den Flansch 27 so weit über den Scheitelabschnitts 17 hinweg gedrückt wird, dass er im Bestreben sich zusammen zu ziehen, über die Rampenfläche 19 in die Ringnut 20 hinein gleitet, wobei er sich von dem Flansch 27 entfernt. Außerdem gelangt bei diesem Vorgang das Löseelement 21 zur Anlage an der Schulter 14 des Innenteils 1 und wird dadurch tiefer in die Aufnahmebohrung 31 hinein bewegt, so dass das Federelement 25 stärker gespannt wird. Das gespannte Federelement 25 drückt daher das Innenteil 1, wenn es losgelassen wird, soweit nach außen zurück, bis das Abstützelement 12 an dem Halteelement 3 und dieses an der Anlagefläche 35 mit noch verbleibender Federkraft anliegt. Dieser sich nach Beendigung des Steckvorgangs einstellende Verbindungszustand ist in Figur 5 gezeigt.

Die Verlagerung des Indikatorrings 30 tritt zuverlässig ein, wenn das Innenteil bis in die in Figur 4 gezeigt Stellung bewegt wird. Hierdurch ist sichergestellt, dass nur dann durch Verlagerung des Indikatorrings 30 eine Verbindungsanzeige erfolgt, wenn Außenteil 2 und das Innenteil 1 richtig zusammengesteckt und verbunden sind. Der Indikatorring 30 befindet sich in dem Verbindungszustand deutlich in einem Abstand von dem Flansch 27 des Löseelements 21. Dieses kann visuell und haptisch gut erkannt und geprüft werden. Der Ringraum zwischen der Ringschulter 16, dem Indikatorring 30 und dem Flansch 27 ist frei, so dass ein Lösewerkzeug ungehindert dort angesetzt werden kann.

Das Lösen der Steckverbindung kann erreicht werden, indem das Innenteil 1 und mit diesem das Löseelement 21 unter Verformung des Federelements 25 beispielsweise mittels eines Werkzeugs in die Aufnahmebohrung 31 hineingedrückt werden. Hierbei wird das Halteelement 3 von der Axialkraft des Federelements 25 entlastet und durch das Löseelement 21 in der Ausnehmung 22 soweit verschoben, bis es an der Seitenwand 34 zur Anlage kommt. Durch das weitere Hineindrücken des Löseelements 21 und gleichzeitiges Herausziehen des Innenteils überspringt das Halteelement 3 das Abstützelement 12 und gibt das Innenteil 1 frei, so dass es vom Außenteil 2 entfernt werden kann. Nach dem Trennen kann der Indikatorring wieder in die Bereitschaftsposition an der ersten Rampenfläche 18 gebracht werden, um das richtige erneute Stecken anzuzeigen.

Die Erfindung ist nicht auf das beschriebene Ausführungsbeispiel beschränkt, sonder kann auch bei Steckverbindungen, die keine oder eine anders gestaltete Löseeinrichtung haben, mit Vorteil verwendet werden. Hierbei kann der Indikatorring z.B. zwischen einer Anlagefläche an der Stirnseite des Außenteils und der Ringschulter angeordnet sein und unmittelbar durch das Außenteil über den Scheitelabschnitt der Ringschulter in die Anzeigeposition gedrückt werden. Der Indikatorring kann aus verschiedenen federnden Materialien bestehen und von der Kreisform abweichende Querschnittsformen haben.

## Patentansprüche

1. Steckverbindung für Rohrleitungen mit einem rohrförmigen Innenteil (1) und einem eine Öffnung aufweisenden Außenteil (2), die miteinander verbunden werden können, wobei das Innenteil mit einem Einsteckende (5) voran in die Öffnung des Außenteils (2) einsteckbar und in einer Verbindungsstellung in der Öffnung des Außenteils (2) mittels eines in radialer Richtung verformbaren Halteelements (3) mit dem Außenteil (2) verbindbar ist, wobei das Innenteil (1) über die Verbindungsstellung hinaus etwas tiefer in die Öffnung des Außenteils (2) hinein bewegbar ist und wobei ein elastisch aufweitbarer Indikatorring (30) vor dem Verbinden des Innenteils (1) mit dem Außenteil (2) in einer Bereitschaftsposition auf dem Innenteil (1) angeordnet ist und beim Verbinden des Innenteils (1) mit dem Außenteil (2) durch das Außenteil (2) aus der Bereitschaftsposition in eine Anzeigeposition verlagert werden kann, wobei das Innenteil (1) eine zwischen der Bereitschaftsposition und der Anzeigeposition angeordnete Ringschulter (16) aufweist, die einen Scheitelabschnitt (17), auf der dem Einsteckende (5) zugekehrten Seite eine sich in Richtung des Einsteckendes (5) verjüngende erste Rampenfläche (18) und auf der dem Einsteckende (5) abgekehrten Seite eine sich in der vom Einsteckende (5) entfernenden Richtung verjüngende zweite Rampenfläche (19) aufweist und wobei der Indikatorring (30) im nicht aufgeweiteten Zustand einen Innendurchmesser hat, der kleiner ist als der Außendurchmesser des Scheitelabschnitts (17) der Ringschulter (16), **dadurch gekennzeichnet, dass** auf dem Innenteil (1) ein Löseelement (21) axial verschiebbar angeordnet ist, durch welches das Halteelement (3) aus der Verbindungsstellung in eine Lösestellung bewegbar ist, wobei das Löseelement (21) eine radiale Schulter (22) aufweist, an der der Indikatorring (30) anliegt, wenn er in der Bereitschaftsposition angeordnet ist und dass zwischen der Schulter (22) und dem Außenteil (2) ein Federelement (25) angeordnet ist, welches das Löseelement (21) ringförmig umgreift und einem Eindringen des Löseelements (21) in das Außenteil (2) entgegenwirkt, wobei das Löseelement (21) gegen die Kraft des Federelements (25) in eine das Lösen des Halteelements (3) bewirkende Lösestellung bewegbar ist, in der das Innenteil (1) von dem Außenteil (2) lösbar ist.

2. Steckverbindung nach Anspruch 1, **dadurch gekennzeichnet, dass** der Indikatorring (30) ein O-Ring aus Elastomer ist.

3. Steckverbindung nach Anspruch 2, **dadurch gekennzeichnet, dass** der Innendurchmesser des O-Rings im entspannten Zustand 10 bis 30 % kleiner ist als der Außendurchmesser des Scheitelabschnitts (17) der Ringschulter (16).

4. Steckverbindung nach Anspruch 1, **dadurch gekennzeichnet, dass** der Indikatorring (30) ein geschlitzter Ring aus Metall oder Kunststoff ist.

5. Steckverbindung nach Anspruch 1, **dadurch gekennzeichnet, dass** der Indikatorring (30) ein Wurmfederring ist.

6. Steckverbindung nach einem der vorhergehenden Ansprüche, **dadurch gekennzeichnet, dass** die erste Rampenfläche (18) die Form eines Kegels hat wobei der Kegelwinkel 50° bis 70°, insbesondere 60°, beträgt.

7. Steckverbindung nach einem der vorhergehenden Ansprüche, **dadurch gekennzeichnet, dass** die Schulter (22) des Löseelements (21) einen konischen, sich in Richtung des Einsteckendes des Innenteils (1) verjüngenden konischen Abschnitt (26) hat, an dem das Federelement (25) mit radialer Vorspannung anliegt.

8. Steckverbindung nach Anspruch 7, **dadurch gekennzeichnet, dass** sich an den großen Durchmesser des konischen Abschnitts (26) ein Flansch (27) anschliesst, der sich radial nach außen erstreckt und eine Anlagefläche für den Indikatorring (30) bildet.

9. Steckverbindung nach einem der vorhergehenden Ansprüche, **dadurch gekennzeichnet, dass** in einer Nut (11) auf der Außenseite des Innenteils (1) ein Abstützelement (12) angeordnet ist, das durch das Haltelement (3) hindurch drückbar ist und an dem das Halteelement (3) in der Verbindungsstellung abgestützt ist.

## Claims

1. A push-fit joint for pipes, including a tubular inner part (1) and an outer part (2) having an opening, said parts being connectable with one another, wherein the inner part has a push-fit end (5) for insertion with its leading end into the opening of the outer part (2) and, in a connected position, is connectable with the outer part (2) in the opening of the outer part (2) by means of a holding element (3) deformable in a radial direction, wherein the inner part (1) is movable beyond the connected position somewhat deeper into the opening of the outer part (2), and wherein an elastically expandable indicator ring (30), prior to connection of the inner part (1) with the outer part (2), is arranged on the inner part (1) in a ready position and is displaceable by the outer part (2) from the ready position into an indicator position on connection of the inner part (1) with the outer part (2), wherein the inner part (1) includes an annular shoulder (16) which is arranged between the ready position and the indicator position and includes an apex section (17), on the side close to the push-fit end (5) a first ramp surface (18) tapering in the direction of the push-fit end (5), and on the side remote from the push-fit end (5) a second ramp surface (19) tapering in the direction away from the push-fit end (5), and wherein the indicator ring (30), in non-expanded condition, has an inner diameter smaller than the outer diameter of the apex section (17) of the annular shoulder (16), **characterized in that** a release element (21) is axially displaceably arranged on the inner part (1) and adapted for moving the holding element (3) from the engaged position into a disengaged position, said release element (21) including a radial shoulder (22) against which the indicator ring (30) abuts when in the ready position, and that between the shoulder (22) and the outer part (2) a spring element (25) is arranged which embraces the release element (21) in the manner of a ring and prevents entry of the release element (21) into the outer part (2), with the release element (21) being movable against the force of the spring element (25) into a release position causing disengagement of the holding element (3) and enabling the inner part (1) to be detached from the outer part (2).

2. The push-fit joint according to claim 1, **characterized in that** the indicator ring (30) is an O-ring made of an elastomer.

3. The push-fit joint according to claim 2, **characterized in that** the inner diameter of the O-ring in relaxed condition is 10 to 30% smaller than the outer diameter of the apex section (17) of the annular shoulder (16).

4. The push-fit joint according to claim 1, **characterized in that** the indicator ring (30) is a slotted ring made of metal or plastics.

5. The push-fit joint according to claim 1, **characterized in that** the indicator ring (30) is a garter spring ring.

6. The push-fit joint according to any one of the preceding claims, **characterized in that** the first ramp surface (18) is shaped in the manner of a cone having a cone angle of between 50° and 70°, in particular 60°.

7. The push-fit joint according to any one of the preceding claims, **characterized in that** the shoulder (22) of the release element (21) includes a conical section (26) which tapers in the direction of the push-fit end of the inner part (1) and is abuttingly engaged by the spring element (25) with radial bias.

8. The push-fit joint according to claim 7, **characterized in that** the large diameter of the conical section (26) is adjoined by a flange (27) extending radially outwardly and forming an abutment surface for the indicator ring (30).

9. The push-fit joint according to any one of the preceding claims, **characterized in that** a groove (11) on the outside of the inner part (1) receives a supporting element (12) adapted to be forced through the holding element (3) and supporting the holding element (3) in the engaged position.

## Revendications

1. Raccord emboîtable pour conduites comprenant une partie intérieure tubulaire (1) et une partie extérieure (2) présentant une ouverture, lesquelles peuvent être assemblées entre elles, la partie intérieure pouvant être emboîtée dans l'ouverture de la partie extérieure (2) avec une extrémité d'emboîtement (5) en premier et pouvant être raccordée à la partie extérieure (2) dans une position de raccordement dans l'ouverture de la partie extérieure (2) au moyen d'un élément de retenue (3) pouvant être déformé en direction radiale, la partie intérieure (1) pouvant être déplacée un peu plus profondément à l'intérieur de l'ouverture de la partie extérieure (2) au-delà de la position de raccordement, et une bague indicatrice (30) qui peut être élargie élastiquement étant placée sur la partie intérieure (1) dans une position d'attente avant le raccordement de la partie intérieure (1) à la partie extérieure (2), ladite bague indicatrice pouvant être déplacée par la partie extérieure (2) de la position d'attente dans une position indicatrice lors du raccordement de la partie intérieure (1) à la partie extérieure (2), la partie intérieure (1) comprenant un épaulement annulaire (16) disposé entre la position d'attente et la position indicatrice et qui comporte une partie sommitale (17), une première surface inclinée (18) sur la face tournée vers l'extrémité d'emboîtement (5) laquelle surface inclinée s'amincit en direction de l'extrémité d'emboîtement (5) et, sur la face opposée à l'extrémité d'emboîtement (5), une deuxième surface inclinée (19) qui s'amincit en s'éloignant de l'extrémité d'emboîtement (5), et la bague indicatrice (30), dans l'état non élargi, présentant un diamètre intérieur inférieur au diamètre extérieur de la partie sommitale (17) de l'épaulement annulaire (16), **caractérisé en ce qu**'un élément de dégagement (21) est disposé sur la partie intérieure (1) de sorte à pouvoir être déplacé axialement, lequel élément de dégagement permet de déplacer l'élément de retenue (3) de la position de raccordement dans une position de dégagement, l'élément de dégagement (21) comprenant un épaulement radial (22) sur lequel repose la bague indicatrice (30) lorsqu'elle est disposée dans la position d'attente, et en ce qu'un élément ressort (25) est disposé entre l'épaulement (22) et la partie extérieure (2), lequel élément ressort enserre de manière annulaire l'élément de dégagement (21) et empêche l'élément de dégagement (21) de pénétrer dans la partie extérieure (2), l'élément de dégagement (21) pouvant être déplacé contre l'effet de la force de l'élément ressort (25) dans une position de dégagement provoquant le dégagement de l'élément de retenue (3) et dans laquelle la partie intérieure (1) peut être dégagée de la partie extérieure (2).

2. Raccord emboîtable selon la revendication 1, **caractérisé en ce que** la bague indicatrice (30) est un joint torique en élastomère.

3. Raccord emboîtable selon la revendication 2, **caractérisé en ce que** le diamètre intérieur du joint torique, à l'état détendu, est de 10 à 30 % plus petit que le diamètre extérieur de la partie sommitale (17) de l'épaulement annulaire (16).

4. Raccord emboîtable selon la revendication 1, **caractérisé en ce que** la bague indicatrice (30) est une bague fendue en métal ou en matière plastique.

5. Raccord emboîtable selon la revendication 1, **caractérisé en ce que** la bague indicatrice (30) est un ressort élastique en forme de spirale.

6. Raccord emboîtable selon l'une des revendications précédentes, **caractérisé en ce que** la première surface inclinée (18) présente la forme d'un cône, l'angle du cône étant compris entre 50° et 70°, en particulier 60°.

7. Raccord emboîtable selon l'une des revendications précédentes, **caractérisé en ce que** l'épaulement (22) de l'élément de dégagement (21) présente une partie conique (26) s'amincissant en direction de l'extrémité d'emboîtement de la partie intérieure (1) et sur laquelle repose l'élément ressort (25) avec une précontrainte radiale.

8. Raccord emboîtable selon la revendication 7, **caractérisé en ce que** le grand diamètre de la partie conique (26) se prolonge par une bride (27) qui s'étend radialement vers l'extérieur et forme une surface d'appui pour la bague indicatrice (30.

9. Raccord emboîtable selon l'une des revendications précédentes, **caractérisé en ce qu**'un élément d'appui (12) est disposé dans une rainure (11) située sur la face extérieure de la partie intérieure (1), lequel élément d'appui peut être poussé au travers de l'élément de retenue (3) et sur lequel l'élément de retenue (3) est en appui dans la position de raccordement.
